# EUROPEAN PATENT SPECIFICATION

(11) **EP 0 589 068 B1**
(45) Date of publication and mention of the grant of the patent: **24.06.1998**
(21) Application number: 92115853.1
(22) Date of filing: 16.09.1992
(51) Int. Cl.: H04N 5/445

(54) **An electronic apparatus indicating a menu in different languages**
Elektronisches Gerät mit verschiedensprachigem Anzeigemenü
Appareil électronique indiquant un menu en différentes langues

(43) Date of publication of application: 30.03.1994
(60) Divisional application: 97101118.4
(73) Proprietor: SONY-WEGA PRODUKTIONS GmbH, 70736 Fellbach (DE)
(72) Inventor: Hoshi, Hiroyuki, D-7012 Fellbach-Oeffingen (DE); Eigo, Mitsuyuki, D-7012 Fellbach-Schmiden (DE); Mank, Armin, D-7050 Waiblingen-Hegnach (DE)
(74) Representative: Körber, Wolfhart, Dr.rer.nat.

(56) References cited:
- EP-A- 0 476 842
- PATENT ABSTRACTS OF JAPAN vol. 13, no. 409 (P-931)11 September 1989 & JP-A-11 50 170

## Description

The invention concerns an electronic apparatus having a display device in which a menu is displayed, according to which the operation is controlled. The invention concerns especially an electronic apparatus indicating the menu in one of different languages, which is selected by a user.

In an electronic apparatus which can be used in several countries or by a user having a knowledge of only different language from that in the country where the apparatus is sold, recently a set of same messages in different languages is prepared. A user can select his desired language in which the message can be displayed on the display thereof.

In the conventional electronic apparatus, because this selection of the language can be made in the part of the menu, it is necessary for a user to first select the item of language selection from the main menu and select a desired language from the language menu. This main menu is, however, normally preset to be displayed in the language used in the country where the apparatus is forwarded to from the factory. Therefore, if the user does not know sufficiently the language of that country, he does not immediately understand which item in the main menu is provided for the language selection, and there is a problem that the user takes time to set his desired language. This problem is solved by the teaching contained in the characterising portion of Claim 1.

The invention as claimed is intended to remedy these drawbacks. The language code memory is preset by a special code which is detected to display the language menu first and after a desired one from the languages listed in the language menu is selected, one of the normal codes each representing a different language is stored in the language code memory.

Therefore, in the beginning when a user starts using the apparatus, the language menu is inevitably displayed before the other menu is displayed. It makes the user easily select the language to be used in displaying the other menu. After the desired language is once selected, the language menu is not displayed normally until the user select the language menu from the other menu again and the other menu is displayed in the desired language selected by the user.

One way of carrying out the invention is described in detail below with reference to drawings which illustrate only one specific embodiment, in which:

Fig. 1 is a schematic block diagram showing a television apparatus 1 as an example of an electronic apparatus in accordance with the invention.

Fig. 2 is a schematic view of a remote commander 6 employed fro controlling the television apparatus 1 shown in Fig. 1.

Fig. 3 is a schematic diagram showing an example of a menu construction used in the television receiver shown in Fig. 1

Fig. 4A is a schematic diagram showing an example of the main menu contained in the menu construction shown in Fig. 3 and described in English.

Fig. 4B is a schematic diagram showing an alternative example of the main menu described in German for the main menu shown in Fig. 4A.

Fig. 5 is a schematic diagram showing an example of the program table contained in the menu construction shown in Fig. 3.

Fig. 6A is a schematic diagram showing an example of the video connection menu contained in the menu construction shown in Fig. 3 and showing the initial state.

Fig. 6B is a schematic diagram showing another state of the video connection menu shown in Fig. 6A.

Fig. 7 is a schematic diagram showing an example of the language menu contained in the menu construction shown in Fig. 3.

Fig. 8 is a flow chart showing how to indicate the language menu and the other menu in accordance with the invention.

Fig. 9 is a functional block diagram showing the function of the controller 8 to realize the steps as shown in Fig. 8.

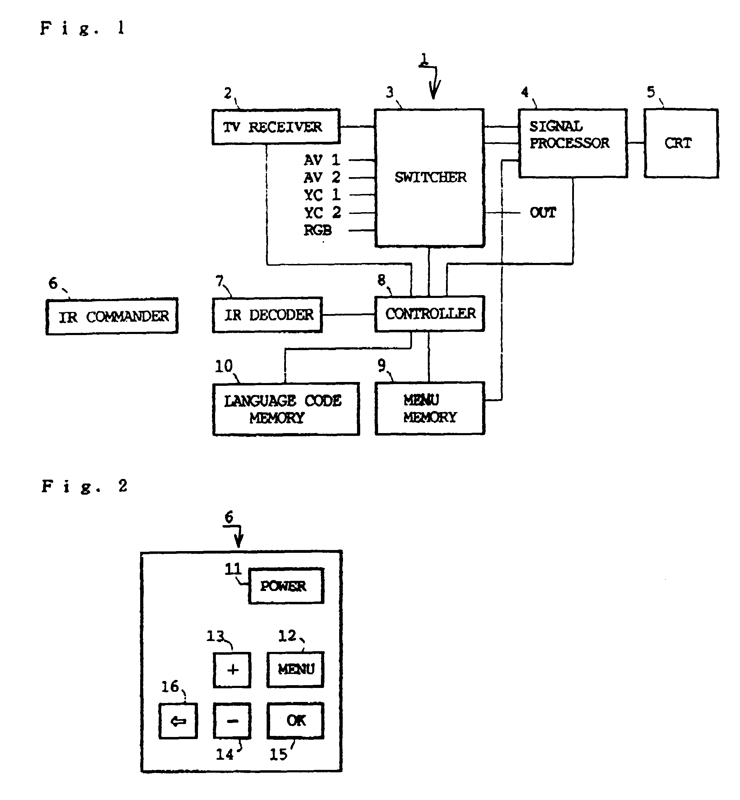

Referring to the drawings, an embodiment of a television apparatus to which the present invention is applied to will be explained. As shown in Fig. 1, the television apparatus (hereinafter referred to as TV apparatus) 1 is not specially different from a conventional one. In the TV apparatus 1, the TV signals from the TV signal receiving circuit 2, as well as the signals from the input terminals AV1, AV2, YC1, YC2, RGB and so on can be supplied to the switcher 3 which selectively supplies those signals to the signal processor 4. The signal processor 4 performs necessary signal processings and derives the processed picture signal to be displayed on the screen of the cathode ray tube (CRT) 5. The signal processings may include so called Picture in Picture (PIP) in which a sub-picture is simultaneously displayed within the main picture displayed on the screen.

Meanwhile, the TV apparatus 1 can be remotely controlled by the remote commander (IR commander) 6. Many kinds of command signals are received and decoded by the command decoder (IR decoder) 7 and the decoded commands are supplied to the controller 8 for example constructed by a micro-processor from which control signals are supplied to each element of the TV apparatus 1.

Because the TV apparatus 1 is controlled by using the menu displayed on the screen, the menu memory 9 is provided in the TV apparatus 1 and the menu is superimposed on the TV picture through the signal processor 4 according to the operation of the remote commander 6.

The remote commander 6 has, among others, as shown in Fig. 2, the power key 11, menu key 12, up key 13, down key 14, OK key 15 and return key 16 which are necessary to operate the menu. If the TV apparatus 1 is in the condition of stand-by, the power is turned on when the power key 11 is depressed and a picture appears on the screen of the CRT 5. If the menu key 12 is depressed, the menu appears on the screen and the operation of the up/down keys 13 and 14 cause the movement of the cursor in the menu on the screen. The OK key 15 is used for data entry and the return key 16 is used for one-step back or the like. The remote commander 6 has other function keys which are not directly related to the invention and therefore the explanation of which will be omitted.

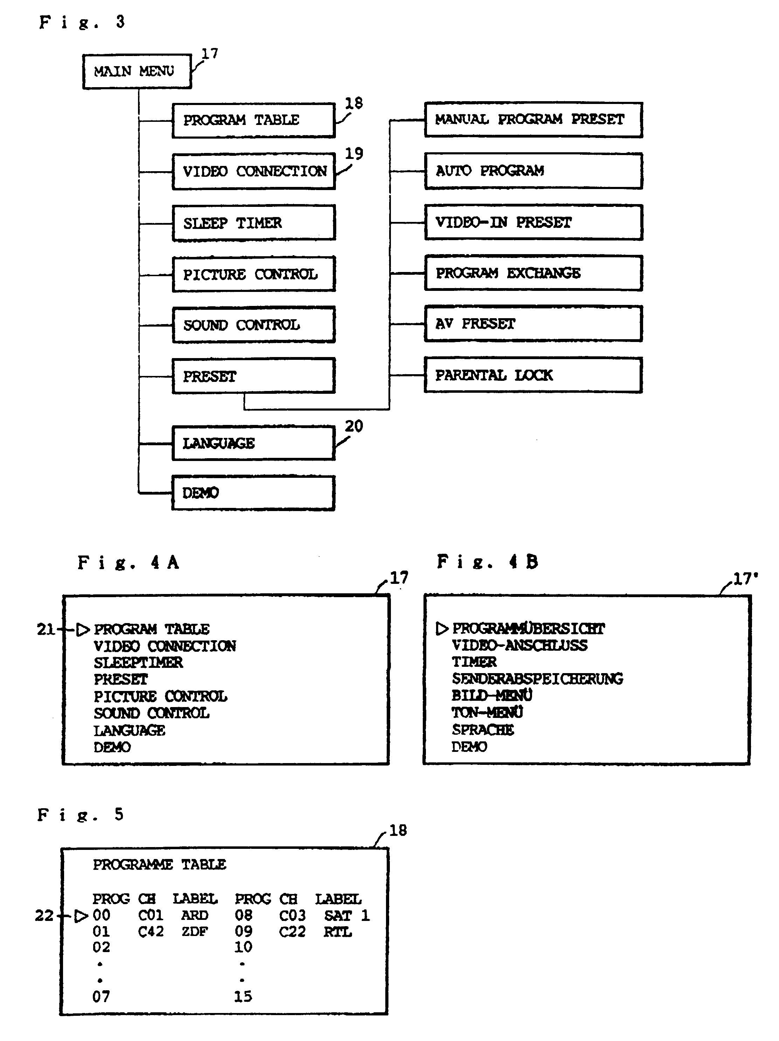

Now referring to Fig. 3 to 7, the menu construction regarding the main part of this invention will be explained. The menu is constructed as a whole to have a tree-construction and includes the main menu 17 at the top layer listing the titles of the sub-menus 18, 19, . . ., 20, . . at the middle layer, in which many kinds of controls of the TV apparatus 1 or the like are made. At the bottom layer are the sub-menus having the functions listed in the sub-menu PRESET, respectively.

A set of the menus are prepared in advance and each of which has same contents but is described in each different language so that the menu described in a desired language which is selected in the language menu 20 as explained later can be displayed. It is not necessary here to explain all of the menu, and only a part of the menu enough to understand the feature of the invention is explained in detail as examples.

In order to change the TV mode in which a picture signal from the TV receiver 2 or other input is displayed on the screen to the menu mode in which the menu is displayed on the screen as superimposed and also to the contrary, the menu key 12 should be depressed.

The depression of the menu key 12 causes the main menu 17 as shown in Fig 4A to be displayed, which includes as a list the titles of the sub-menus such as program table, video connection, sleep timer, picture control, sound control, language and demonstration (demo).

The selection of the sub-menus 18, 19, . . ., 20, . . can be performed by locating the cursor 21 at the desired item of the list in the menu 17, for example, with the operation of the up/down keys 13 and 14 so that the line indicated by the cursor 21 is high-lighted and then by depressing the OK key 15.

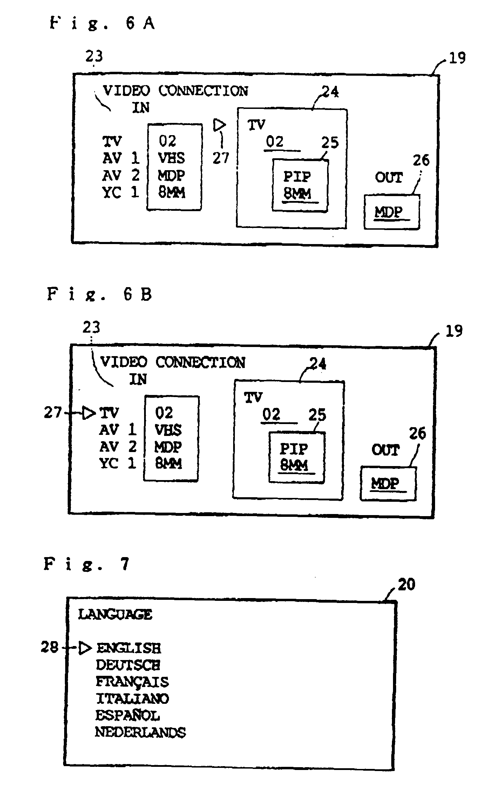

If the program table is selected in the list by way of an example, the sub-menu 18 for showing the program table is displayed as shown in Fig. 5, whereby it can be displayed which channel or input is preset to which program and what it is. If the cursor 22 is located to the item of the desired program by using the up/down keys 13 and 14 from Program 00 always at the beginning, the line indicated by the cursor 22 is highlighted. The program is selected by depressing the OK key 15 and the menu mode is changed to TV mode simultaneously so that the picture of the selected program is displayed on the screen, while the main menu 17 is again displayed if the return key 16 is depressed before the OK key is depressed. The preset of the programs displayed in this program table is made by using the preset menu, though the detail will not be explained here.

If the video connection is selected in the list of the main menu 17, the sub-menu 19 for setting the video connection is displayed as shown in Fig. 6A. In the left column of the sub-menu 19 the input list 23 is indicated and it shows which inputs can be selected and which input is supplied with which signal source. This input list is only for display as same as the program table in the sub-menu 18 and the modification of the list can be made by using the preset menu.

In the middle column of the sub-menu 19, the main frame 24 imitating the main screen and the sub-frame 25 imitating the sub-screen within the main screen in the case of the PIP mode are illustrated. Hereby the signal sources of the inputs presently displayed on the main screen and on the sub-screen within the main screen are listed respectively adjacently to the label "TV" and the label "PIP" and the inputs to be displayed also can be selected in combination with the input list 23.

In the frame 26 in the right column of the sub-menu 19 it is indicated adjacently to the label "OUTPUT" which signal source of the input is presently supplied to the output terminal and the input to be connected also can be selected in combination with the input list 23.

When the sub-menu 19 is displayed, the cursor 27 points the label "TV" at the main frame 24 of the middle column as shown in Fig. 6A. In this situation, the cursor 27 can be moved to the label "PIP" at the sub-frame 25 of the middle column or the label "OUT" at the right column 26 by using the up/down keys 13 and 14. If the OK key 15 is depressed after the cursor 27 is located at a desired one, the cursor 27 is shifted to the input list 23 at the left column as shown in Fig. 6B, while the display of the signal source adjacently to the label which is previously pointed by the cursor 27 is flashing or blinking.

The cursor 27 can be located to select a desired signal source from the input list 23 by using the up/down keys 13 and 14 so that the signal source pointed by the cursor 27 is also indicated as blinking in one of the frames 24, 25 or 26, in which the label is previously pointed by the cursor 27. In this condition, if the OK key 15 is depressed, the selected signal source is actually supplied to.

For example, in order to display the signal source of the input AV 2 on the sub-screen in the PIP mode, after the sub-menu 19 is displayed, the cursor 27 is moved to the label "PIP" in the frame 25 and the OK key 15 is depressed to further move the cursor 27 to the input list 23. As the cursor 27 is shifted to the input AV 2, the label "MDP (Multi Disc Player)" is displayed as blinking adjacently to the label "PIP".

At that time, if the OK key 15 is depressed, the signal from the multi disc player is displayed on the sub-screen in the PIP mode. Simultaneously the cursor 27 is moved to the next item to be selected, in this case, to the label "OUTPUT".

If the return key 16 is depressed before the OK key 15 is depressed, the condition of one-step before is recovered. In the above case, for example, if the return key 16 is depressed before the OK key 15 is depressed last, the cursor 27 returns to point the label "PIP" and the cursor 27 can be moved again to the label "TV" or "OUTPUT" by using the up/down keys 13 and 14.

This feature of the video connection menu 19 can be used independently from the invention. The advantage of the sub-menu 19 is to make a user to easily understand the present connection of the input and to easily change the connection between each input and the TV screen, PIP sub-screen and the output in one menu or one image.

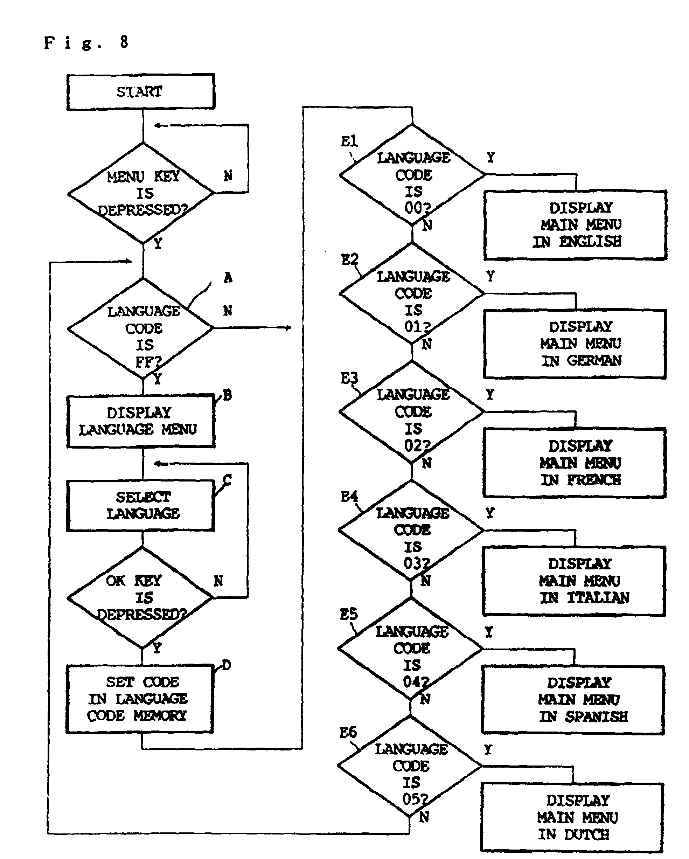

The language selection is performed by using the language menu 20 as shown in Fig. 7. The language menu 20 is used for designating the language in which the above mentioned other menus should be described. The language menu 20 indicates those languages for example in the own languages, i.e. ENGLISH, DEUTSCH, FRANÇAIS, ITALIANO, ESPAÑOL, NEDERLANDS.

If the cursor 28 is moved to the desired language similarly to the above, the line pointed by the cursor 28 is high lighted. When the OK key 15 is depressed, a code representing the designated language is stored in the language code memory 10 installed in the TV apparatus 1, while the display on the screen goes back to the main menu 17. At this moment, the main menu 17 is described in the designated language corresponding to the code stored in the language code memory 10 already.

It is, however, important in which language the main menu 17 is described when the user who obtained the TV apparatus 1 first turns on the power and depresses the menu key 17. For example, since the TV apparatus sold in the German market is bought in a high probability by users who understand German language, it is very reasonable to describe the main menu 17' in German language as shown in Fig. 4B. It is, however, still indefinite whether 100 % of the users may understand German language. If a user who can read only English obtained the TV apparatus 1, he wants to display the main menu 17 in English. He, unfortunately, does not understand which item in the list of the main menu 17' is for language selection, because the main menu 17' is described in German as shown in Fig. 4B.

Therefore, in the invention, the menu is not displayed in such the order as described above, but in order to solve this problem, the language menu 20 is once automatically displayed before the main menu 17 is displayed and the main menu 17 is sequentially displayed after the desired language is selected in the language menu 20, when the user who bought the TV apparatus 1 operates the menu key 12 at the first time.

After then the main menu 17 and the other menus (except the language menu 20) are always displayed in the selected language until the language to describe is changed to another language in the language menu 20 and it does not happen that the language menu 20 is always displayed first after the menu key 12 is depressed.

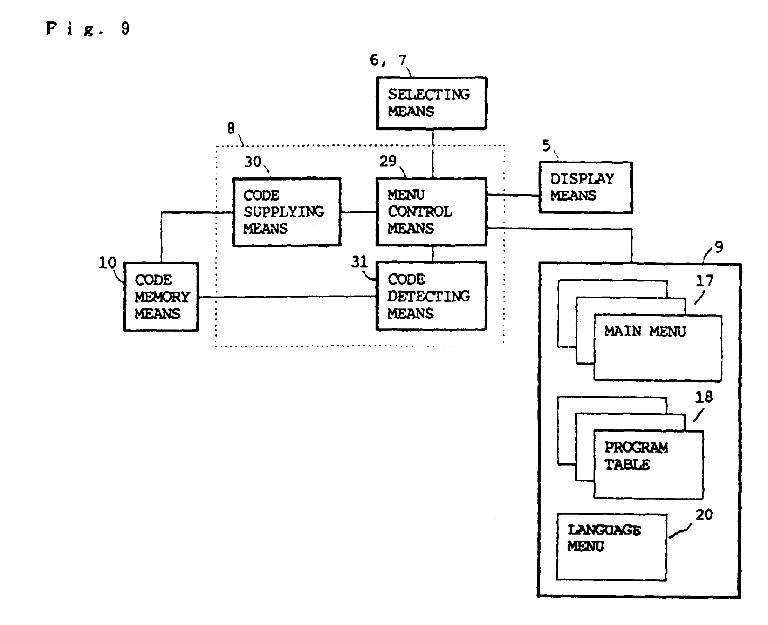

To realize the invention the control is made as below. When the TV apparatus 1 is forwarded from the factory, the language code memory 10 is preset into FF (hexadecimal) as a reset condition. When the user who bought the TV apparatus 1 turns the power and depresses the menu key 12, the code stored in the language code memory 10 is first checked at the step A as shown in Fig. 8. If the code is FF, the language menu 20 is displayed at the step B, by which the user can select the desired langauge at the step C. When the OK key 15 is depressed afterwards, the code representing the desired language is stored into the language code memory 10 at the step D. As such the codes, the code 00 designates for English, the 01 for German, the 02 for French, the 03 for Italian, the 04 for Spanish and the 05 for Dutch. After the code stored in the language memory 10 is check again at the step E1 to E6, the main menu 17 described in the corresponding language according to the code stored in the language code memory 10 is displayed on the screen,

After any language is once selected in the language menu 20, the language menu 20 is not displayed even after the menu key 12 is depressed since the second time and the main menu 17 is displayed in the corresponding language, because the code 00 through 05 is stored in the language code memory 10 already.

Fig. 9 is a functional schematic diagram showing the construction of the controller 8 to realize the above steps illustrated in Fig. 8. The selecting signal from the selecting means as the remote commander 6 and the decoder 7 is supplied to the menu control means 29, while the code signal stored in the code memory means 10 is detected by the code detecting means 31. If the code stored in the code memory means 10 is the special code FF, the menu control means 29 read out the language menu 20 from the memory means 9 to be displayed on the screen of the display means 5. If the desired language is selected in the language menu 20, the menu control means 29 provides the location of the cursor 27 on the language menu 20 to the code supplying means 30 from which the language code corresponding to the selected language is supplied to the code memory means 10. The menu control means 29 receives the last stored code from the code memory 10 through the code detecting means 31 and selects the main menu 17 described in the selected language from the menu memory 9 to display it.

By the way, if the return key 16 is accidentally or intentionally depressed without any language selection by depressing the OK key 15 during the first display of the language menu 20, it is possible to return to the main menu 17. For this case, the main menu 17 described in English language may be displayed, even if the code FF is detected. If the user does not care about the language, it is more convenient.

Furthermore, although the language menu 20 shown in Fig. 7 is described in the own languages, it is also possible to describe each 6 languages in 6 different languages as a matrix as well as to indicate the kinds of the language in country codes like GB, D (or DE), FR, IT, ES, NL.

In the above description, the language code memory 10 and menu memory 9 are explained as separate memories. However, it is also possible to use the memory installed in the micro-processor of the controller 8 for this purpose.

According to the above embodiment, since the language menu 20 is inevitably displayed when the TV apparatus is first used, it is very easy for the user to operate the menu by selecting the desired language.

## Claims

1. An electronic apparatus (1) indicating a menu in different languages comprising: display means (5);
menu memory means (9) for storing a language menu (20) indicating the kinds of language to be used and a set of other menus (17, 18, 19) each having essentially the same content but being described in different ones of the languages listed in the language menu (20);
menu control circuit means (29) for displaying the language menu (20) and one of the other menus (17, 18, 19) on the display means (5);
selecting means (6) for selecting a language from the language menu (20);
language code supplying means (30) for deriving a language code (00 to 05) representing the selected language;
language code memory means (10) for storing the code derived from the language code supplying means (30);
code detecting means (31) for detecting the code stored in the language code memory means (10); and
the menu control means (29) selecting one from the set of other menus (17, 18, 19) described in the language corresponding to the code stored in the language code memory means (10);
**characterized in that**
in the language code memory means (10) a special code (FF) other than the language codes (00 to 05) is preset as an initial value, and if the code detecting means (31) detects the special code (FF), the menu control circuit means (29) displays the language menu (20) before one of the other menus (17, 18, 19) is displayed, while if the code detecting means (31) detects a language code (00 to 05), the menu control circuit means (29) displays one of the other menus (17, 18, 19).

2. An electronic apparatus as claimed in claim 1, wherein the other menus (17, 18, 19) include the language menu (20).

3. An electronic apparatus as claimed in claim 1 or 2, wherein the special code designates also one of the languages to be used.

## Patentansprüche

1. Elektronisches Gerät (1), das ein Menü in verschiedenen Sprachen anzeigt, aufweisend:
eine Anzeigeeinrichtung (5);
eine Menüspeichereinrichtung (9) zum Speichern eines Sprachmenüs (20), das die zu verwendenden Sprachen anzeigt und eines Satzes von anderen Menüs (17, 18, 19), welche im wesentlichen den gleichen Inhalt haben, aber in verschiedenen der in dem Sprachmenü (20) aufgeführten Sprachen beschrieben sind;
eine Menüsteuerschaltungseinrichtung (29) zur Anzeige des Sprachmenüs (20) und eines des anderen Menüs (17, 18, 19) auf der Anzeigeeinrichtung (5);
eine Auswahleinrichtung (6) zur Auswahl einer Sprache aus dem Sprachmenü (20);
eine Sprachcode-Versorgungseinrichtung (30) zur Ableitung eines Sprachcodes (00 bis 05), der die gewählte Sprache repräsentiert;
eine Sprachcode-Speichereinrichtung (31) zur Erfassung des in der Sprachcode-Speichereinrichtung (10) gespeicherten Codes; und
wobei die Menüsteuereinrichtung (29) eines aus dem Satz der anderen Menüs (17, 18, 19) auswählt, das in der Sprache entsprechend des in der Sprachcode-Speichereinrichtung (10) gespeicherten Codes beschrieben ist;
**dadurch gekennzeichnet,** daß in der Sprachcode-Speichereinrichtung (10) ein spezieller Code (FF) anders als die Sprachcodes (00 bis 05) als ursprünglicher Wert vorgewählt ist, und daß, wenn die Code-Erfassungseinrichtung (31) den speziellen Code (FF) erfaßt, die Menüsteuerschaltungseinrichtung (29) das Sprachmenü (20) anzeigt, bevor eines der anderen Menüs (17, 18, 19) angezeigt wird, während, wenn die Code-Erfassungseinrichtung (31) einen Sprachcode (00 bis 05) erfaßt, die Menüsteuerschaltungseinrichtung (29) eines der anderen Menüs (17, 18, 19) anzeigt.

2. Elektronisches Gerät gemäß Anspruch 1,
wobei die anderen Menüs (17, 18, 19) das Sprachmenü (20) enthalten.

3. Elektronisches Gerät gemäß Anspruch 1 oder 2,
wobei der spezielle Code auch eine der zu verwendenden Sprachen bezeichnet.

## Revendications

1. Appareil électronique (1) fournissant un menu dans différentes langues, qui comprend :
un moyen d'affichage (5) ;
un moyen (9) de mémorisation de menus servant à stocker un menu langues (20) qui indique les types de langues à utiliser et un groupe d'autres menus (17, 18, 19) ayant sensiblement chacun le même contenu, mais se présentant dans différentes de ces langues énumérées dans le menu langues (20) ;
un moyen (29) formant un circuit de commande de menus servant à afficher le menu langues (20) et l'un des autres menus (17, 18, 19) sur le moyen d'affichage (5);
un moyen de sélection (6) servant à sélectionner une langue dans le menu langues (20);
un moyen (30) de délivrance de code de langue servant à produire un code de langue (00 à 05) qui représente la langue choisie ;
un moyen (10) formant une mémoire de code de langue servant à stocker le code fourni par le moyen (30) de fourniture de code de langue ;
un moyen (31) de détection de code servant à détecter le code stocké dans le moyen (10) formant la mémoire de code de langue ; et
le moyen (29) de commande de menus sélectionnant un menu parmi l'ensemble d'autres menus (17, 18, 19), se présentant dans la langue qui correspond au code stocké dans le moyen (10) mémoire de code de langue ;
caractérisé en ce que :
dans le moyen (10) formant la mémoire de code de langue, un code spécial (FF) autre que les codes de langues (00 à 05) est prépositionné au titre de valeur initiale, et, si le moyen de détection de code (31) détecte le code spécial (FF), le moyen (29) formant le circuit de commande de menus affiche le menu langues (20) avant que l'un des autres menus (17, 18, 19) soit affiché, tandis que, si le moyen (31) de détection de code détecte un code de langue (00 à 05), le moyen (29) formant le circuit de commande de menus affiche l'un des autres menus (17, 18, 19).

2. Appareil électronique selon la revendication 1, où les autres menus (17, 18, 19) comportent le menu langues (20).

3. Appareil électronique selon la revendication 1 ou 2, où le code spécial désigne également l'une des langues à utiliser.
